# FASCICULE DE BREVET EUROPEEN

(11) **EP 0 796 134 B1**
(45) Date de publication et mention de la délivrance du brevet: **17.07.2002**
(21) Numéro de dépôt: 96934889.5
(22) Date de dépôt: 10.10.1996
(51) Int. Cl.: B01D 53/26, B01D 53/00, B01D 53/14

(54) **PROCEDE DE TRAITEMENT DU GAZ NATUREL CONTENANT DE L'EAU ET DES HYDROCARBURES CONDENSABLES**
VERFAHREN ZUM BEHANDELN VON ERDGAS, DAS WASSER UND KONDENSIERBARE KOHLENWASSERSTOFFE ENTHÄLT
METHOD FOR TREATING NATURAL GAS CONTAINING WATER AND CONDENSIBLE HYDROCARBONS

(30) Priorité: 11.10.1995 FR 9512004
(43) Date de publication de la demande: 24.09.1997
(73) Titulaire: INSTITUT FRANCAIS DU PETROLE, 92500 Rueil Malmaison (FR)
(72) Inventeur: COLLIN, Jean-Claude, F-78540 Marsinval-Verneuil (FR); LARUE, Joseph, F-78240 Chambourcy (FR); ROJEY, Alexandre, F-92500 Rueil-Malmaison (FR)
(86) Numéro de dépôt international: FR9601581
(87) Numéro de publication internationale: WO9713574

(56) Documents cités:
- EP-A- 0 218 125
- EP-A- 0 362 023
- GB-A- 2 139 111

## Description

La présente invention a pour objet un procédé de traitement d'un gaz, notamment un procédé de déshydratation.

La présente invention trouve avantageusement son application pour la déshydratation du gaz naturel.

Avantageusement, il permet de plus d'effectuer la séparation des hydrocarbures condensables inclus dans le gaz naturel, par exemple ceux qui comportent au moins trois atomes de carbone.

Les produits pétroliers et notamment le gaz naturel contiennent des produits indésirables pour leur transport et/ou leur manipulation.

Parmi ces produits, l'un des principaux constituants à éliminer est l'eau qui se révèle être un promoteur d'hydrates et qui favorise la corrosion. En effet, les hydrates peuvent provoquer le bouchage et le blocage des conduites de transport qui empêchent à la longue tout passage du gaz, et l'action corrosive du gaz une détérioration des conduites et des installations de traitement. Ces deux phénomènes ont des conséquences extrêmement pénalisantes, par exemple des arrêts de la production souvent assez longs car la décomposition des hydrates formés est très difficile, ce qui entraîne des pertes financières importantes.

Pour éviter ces inconvénients, différents procédés sont décrits dans l'art antérieur.

Le brevet FR-A-2.605.241 et le document EP-A-0 362 023 décrivent un procédé de traitement du gaz naturel mettant en oeuvre plusieurs étapes effectuées dans plusieurs dispositifs successifs. Le gaz à traiter est contacté dans une première enceinte avec un solvant physique réfrigéré pour produire un gaz saturé en eau additionné du solvant, ce gaz est ensuite refroidi dans un échangeur provoquant la condensation d'une phase aqueuse contenant le solvant et l'eau de saturation ainsi que d'une phase d'hydrocarbures liquides. Le gaz déshydraté et refroidi, et la fraction d'hydrocarbures condensés sont ensuite séparés dans une enceinte de séparation.

Ce procédé présente des avantages importants par rapport aux techniques antérieures. Néanmoins, la séparation entre le méthane et les hydrocarbures, tels que le propane et les hydrocarbures dont les molécules comportent plus de trois atomes de carbone, est incomplète.

De plus, il nécessite l'utilisation d'au moins deux dispositifs, ce qui augmente l'encombrement des installations de traitement et les investissements correspondants.

La présente invention pallie les inconvénients de l'art antérieur et permet de traiter à moindre coût des gaz comportant de l'eau pouvant se présenter sous différentes formes et qui doivent être déshydratés, notamment le gaz naturel. Elle s'applique également au traitement de gaz produits dans des installations industrielles, par exemple de gaz de raffinerie. Le procédé et l'installation selon l'invention ne requièrent qu'une seule enceinte pour réaliser la déshydratation, par exemple un échangeur-colonne, ce qui rend l'installation moins coûteuse et moins encombrante que les installations connues de l'art antérieur.

Elle permet de plus de réaliser la séparation de constituants condensables à différentes températures, éventuellement présents dans le gaz à traiter, en fonction de leur composition et selon la demande du producteur et/ou des contraintes de production.

Ainsi, elle s'applique avantageusement au gaz naturel comportant au moins de l'eau, du méthane et des hydrocarbures condensables, tels que les C₃+ et/ou éventuellement les C₂+.

Dans toute la suite de la description, on désigne par C₃+ l'ensemble des hydrocarbures comportant au moins trois atomes de carbone par molécule, par C₄+ l'ensemble des hydrocarbures comportant au moins quatre atomes de carbone et par C₅+ l'ensemble des hydrocarbures comportant au moins cinq atomes de carbone.

On désigne par l'expression "gaz traité", le gaz déshydraté ou au moins épuré en partie de l'eau de saturation.

La présente invention concerne un procédé de traitement d'un gaz naturel contenant au moins de l'eau dans le but de débarasser au moins en partie ledit gaz de l'eau, le procédé comprend au moins les étapes suivantes:
a) on introduit dans une zone de contact ledit gaz par un premier conduit et un liquide comprenant une phase aqueuse en présence d'un solvant par un deuxième conduit, ledit solvant étant un composé non hydrocarbure autre que de l'eau,
b) on met en contact direct ledit gaz avec ledit liquide sur au moins une partie de la zone de contact, et on refroidit dans ladite zone de contact ledit gaz en contact avec ledit liquide au moyen d'un circuit de réfrigération pour provoquer la condensation d'une phase liquide qui contient de l'eau et qui est substantiellement débarrassée de solvant,
c) on évacue en fond de la zone de contact ladite phase liquide par un troisième conduit,
d) on évacue en tête de la zone de contact une phase gazeuse non condensée par un quatrième conduit,
e) on récupère une première phase hydrocarbure à un niveau intermédiaire entre la tête et le fond de la zone de contact et on évacue ladite première phase hydrocarbure par un cinquième conduit.

Le liquide contenant le solvant peut être introduit dans la partie supérieure de la zone de contact.

Dans la zone de mise en contact, let gaz naturel peut circuler à contre courant du liquide.

Selon un mode de réalisation de l'invention, à l'étape b), on peut refroidir en produisant un gradient de température variant en fonction de la nature dudit gaz et/ou de la nature dudit solvant. On peut, par exemple, utiliser la phase gazeuse évacuée par le quatrième conduit pour refroidir ledit gaz en contact avec ledit liquide.

Le solvant est choisi dans le groupe comprenant: méthylpropyléther, éthylpropyléther, dipropyléther, méthyltertiobutyléther, dimethoxyméthane, diméthoxyéthane, méthanol, éthanol, méthoxyéthanol, propanol, les aminés et les cétones.

Le procédé selon l'invention peut comprendre les étapes supplémentaires :
f) en fond de la zone de contact, on sépare par décantation ladite phase liquide en une deuxième phase aqueuse et une deuxième phase hydrocarbure, et
g) on évacue ladite deuxième phase hydrocarbure par un sixième conduit.

La zone de contact peut comporter un rebouilleur. La première et la deuxième phase hydrocarbure peuvent être introduites dans un moyen de stabilisation.

Avantageusement, le procédé selon l'invention est utilisé pour déshydrater un gaz naturel comportant de l'eau et au moins un hydrocarbure autre que le méthane et à la séparation au moins partielle des hydrocarbures autres que le méthane.

Le procédé mis en oeuvre conduit à une diminution des coûts de traitement du gaz naturel et à une augmentation du rendement de production des fractions d'hydrocarbures sélectionnées.

D'autres avantages et caractéristiques de l'invention apparaîtront mieux à la lecture de la description donnée à titre d'exemples de réalisation, dans le cadre d'applications nullement limitatives, au traitement d'un gaz naturel, en se référant aux dessins annexés où :
- la figure 1 schématise le principe de base utilisant un circuit de réfrigération externe,
- les figures 2A et 2B décrivent une installation comportant deux circuits de réfrigération comprenant un circuit externe et un circuit d'échange thermique avec au moins une partie du gaz traité, ainsi que des moyens de stabilisation,
- la figure 3 montre une variante de réalisation auto-réfrigérée pour laquelle le gaz traité est recyclé pour être utilisé comme agent de refroidissant,
- la figure 4 décrit un exemple de réalisation pour une installation comportant des moyens de récupération des hydrocarbures liquides d'un gaz naturel,
- les figures 5 et 6 schématisent des installations intégrant des moyens de prélèvement de différents condensats associés à des moyens de stabilisation,
- la figure 7 décrit un exemple d'installation qui intègre un procédé de stabilisation optimisée,
- les figures 8 et 9 schématisent des variantes de réalisation, où la stabilisation s'effectue dans une zone d'échange et de chaleur,
- les figures 10, 11 et 12 sont des exemples de technologie utilisée pour la fabrication de l'échangeur, et
- la figure 13 schématise un exemple de technologie retenu pou les zones d'échange et de chaleur.

Le procédé mis en oeuvre selon l'invention consiste à réaliser simultanément la réfrigération d'un gaz comportant de l'eau de saturation et, sa mise en contact avec une fraction liquide, en présence d'un solvant ayant notamment pour fonction d'éviter la formation de glace et/ou d'hydrates.

L'étape de réfrigération provoque une condensation de l'eau de saturation contenue dans le gaz ainsi que des fractions liquides d'hydrocarbures dans le cas d'un gaz naturel riche.

Avantageusement, ces deux étapes sont, par exemple, réalisées dans une enceinte unique regroupant au moins un circuit de mise en contact du gaz, de la fraction liquide et du solvant ou, circuit principal et, un circuit de réfrigération.

Pour un gaz naturel riche, l'installation permet avantageusement de fractionner et récupérer les hydrocarbures liquides pour des compositions différentes, en fonction de la composition du gaz traité et de la demande du producteur.

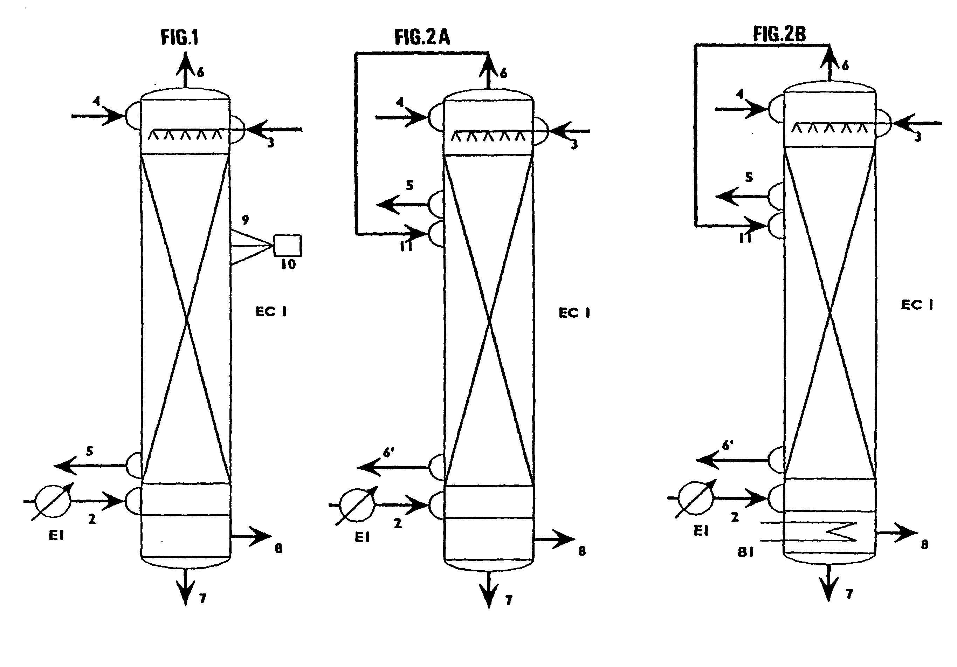

La figure 1 illustre le principe de base du procédé appliqué à titre d'exemple à un gaz naturel saturé en eau et renfermant des hydrocarbures supérieurs associés.

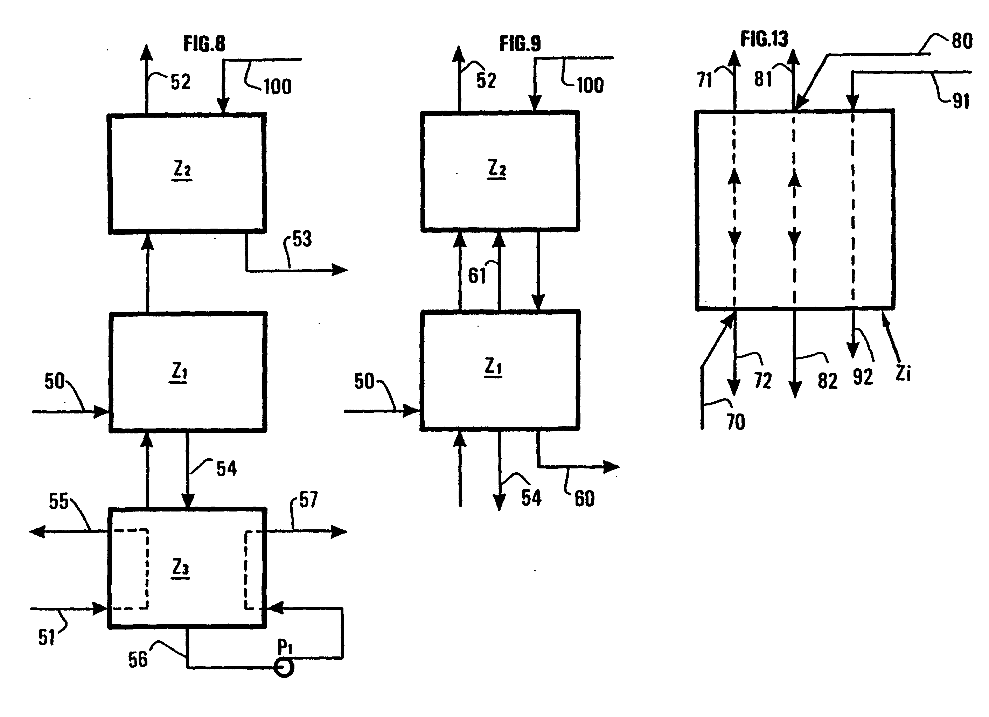

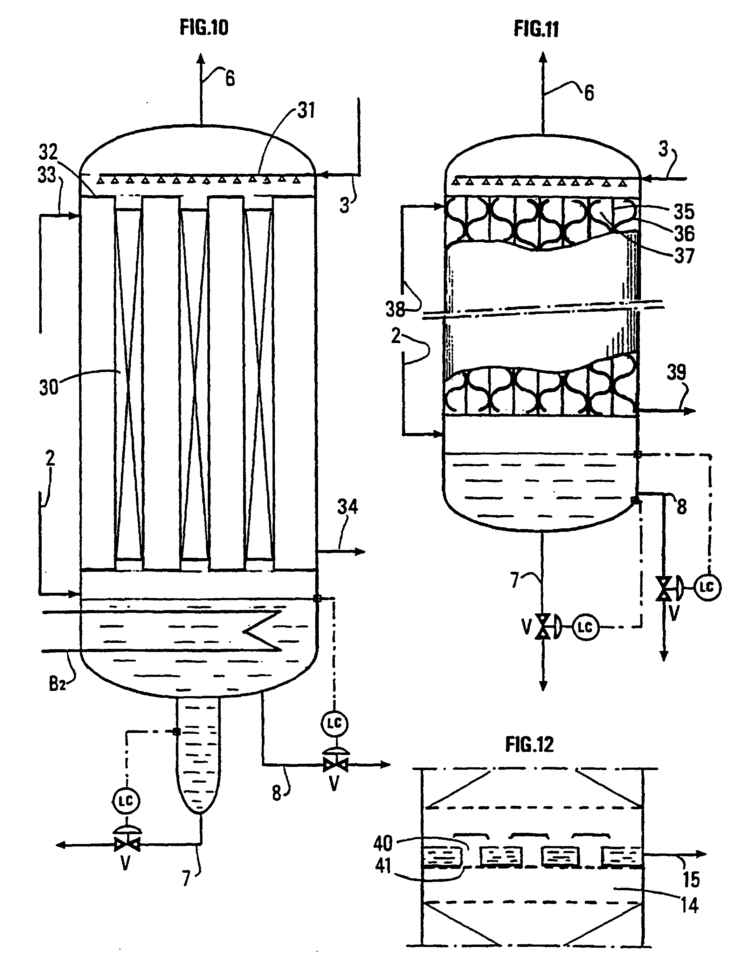

Le gaz à traiter est introduit dans une enceinte EC_{1,} tel qu'un échangeur de chaleur, par le conduit 2 situé dans sa partie inférieure. A l'intérieur de cet échangeur EC_{1,} il est simultanément contacté avec une phase liquide formée au moins en partie par un solvant arrivant par le conduit 3 dans l'échangeur EC₁, et refroidi par un échange de chaleur indirect, par exemple à travers une paroi (figures 8, 9).

La réfrigération peut être assurée par un fluide caloporteur, qui pénètre dans la calandre de l'échangeur EC₁ par le conduit 4, circule de haut en bas pour abaisser la température du gaz à traiter qui circule dans le sens ascendant, avant de ressortir de l'échangeur par le conduit 5.

D'autres exemples de réalisation pour le circuit de réfrigération sont décrits aux figures 2 à 4, à titre indicatif et nullement limitatif.

Le gaz à traiter est de préférence contacté à contre-courant et de manière continue avec la phase liquide comportant le solvant circulant dans un sens descendant à l'intérieur de l'échangeur EC₁ et le gaz à traiter dans un sens ascendant. La réfrigération du gaz est de préférence assurée par un échange de chaleur continu à contre-courant.

Cette réfrigération provoque la condensation des hydrocarbures lourds contenus dans le gaz et d'une partie de l'eau de saturation du gaz. Ces deux phases liquides condensées circulent dans le dispositif d'une manière descendante par gravité, à contre-courant du gaz traité qui s'appauvrit progressivement en propane, butane et hydrocarbures plus lourds, du fait de l'échange de matière entre la phase gazeuse et les hydrocarbures liquides. La phase liquide hydrocarbure condensée s'enrichit au fur et à mesure en constituants plus lourds en descendant. La phase aqueuse condensée riche en solvant en tête de l'échangeur s'appauvrit en solvant par contact avec le gaz.

Ces deux phases sont séparées par décantation dans la partie inférieure de l'échangeur colonne avant d'être évacuées respectivement par les conduits 7 et 8.

Il est aussi possible d'évacuer l'ensemble de ces deux phases liquides par un conduit unique situé dans la partie inférieure de l'échangeur, par exemple à la place du conduit 7.

Le gaz traité chargé en solvant est évacué en tête de l'échangeur colonne EC₁ par le conduit 6.

La phase gazeuse chargée de solvant et la phase liquide condensée sont ensuite traitées, par exemple, séparément en fonction de leur utilisation ou de leur mode de transport, ou encore des spécifications données par le producteur ou le consommateur.

Le solvant vaporisé et entraîné dans la phase gazeuse permet d'éviter les problèmes de formation d'hydrates liés à la réfrigération.

L'échangeur de chaleur EC₁ peut aussi être équipé de moyens 9 de contrôle de la température, par exemple des capteurs de température qui sont reliés à des moyens de contrôle et de traitement 10. Les capteurs de température peuvent être distribués le long de l'échangeur de chaleur EC₁ de façon à mesurer en plusieurs points les températures régnant le long du parcours du gaz en circulation.

Le gaz à traiter peut être prérefroidi avant d'être introduit dans l'échangeur EC₁, à l'aide d'un fluide de réfrigération disponible, tel de l'eau et/ou de l'air dans un échangeur E₁ situé sur le conduit 2. Cette première étape de préréfrigération permet notamment de séparer une fraction gazoline formée par les hydrocarbures condensables dans les conditions de température et de pression établies à la sortie de l'échangeur E₁.

On utilise un solvant au moins partiellement miscible avec l'eau. De préférence, il possède une température d'ébullition inférieure à celle de l'eau ou forme avec l'eau un azéotrope dont la température d'ébullition est inférieure à celle de l'eau de manière à pouvoir être entraîné par le gaz non condensé.

Ce solvant est par exemple un alcool et de préférence le méthanol. Il peut aussi être choisi parmi les solvants suivants : méthylpropyléther, éthylpropyléther, dipropyléther, méthyltertiobutyléther, dimethoxyméthane, diméthoxyéthane, méthanol, éthanol, méthoxyéthanol, propanol ou encore être choisis dans différentes classes de solvants tels que par exemple les amines ou les cétones ou encore un mélange formé à partir d'un ou plusieurs de ces produits.

La quantité de solvant à injecter est habituellement ajustée en fonction de la température, de la pression et/ou de la composition du gaz afin d'éviter la formation d'hydrates et la formation de cristaux de glace dus à la présence de l'eau.

Ainsi, par exemple, le rapport en moles du débit de solvant sur le débit du gaz traité est compris entre 1/1000 et 1/10.

Avantageusement, on optimise le procédé de traitement en adaptant la quantité de solvant injecté en fonction, par exemple de la composition du gaz et/ou des conditions opératoires, telles que la température et/ou la variation de température et/ou la pression. Pour cela on tient compte, par exemple, des valeurs de température et/ou du gradient de température mesurées par les capteurs de température situés au niveau de l'échangeur.

De préférence, on tient compte aussi des opérations effectuées ensuite sur le gaz traité issu de l'enceinte.

Par circulation à contre-courant, le gaz entraîne le solvant contenu dans les phases liquides qui descendent par gravité. Ces phases liquides sont recueillies en fond, substantiellement débarrassées de solvant. Le solvant injecté en tête est donc principalement évacué dans la phase gazeuse sortant en tête. La quantité de solvant injecté peut être ainsi ajustée afin d'obtenir le niveau de concentration dans cette phase gazeuse requis pour éviter la formation d'hydrates, compte-tenu des conditions de température et de pression.

La teneur en solvant dans la phase gazeuse est généralement réduite et d'autant plus faible que la température est basse. La quantité de solvant injectée en tête par exemple de l'échangeur est donc relativement faible et constitue un appoint destiné à compenser les pertes dans le gaz.

Le solvant injecté en tête n'est pas nécessairement pur et peut être, par exemple, mélangé avec de l'eau, à condition toutefois que la concentration de solvant en phase aqueuse permette d'éviter la formation d'hydrates.

La variation de température ou le gradient de température provoqué dans l'échangeur sont par exemple choisis en fonction de la nature du gaz et, de la quantité d'hydrocarbures condensés, tels que les GPL et la gazoline, à récupérer.

De même, l'abaissement en température du gaz à traiter, est de préférence réalisé pour obtenir un gradient de température sur l'ensemble de l'échangeur.

Avantageusement, le procédé est auto-réfrigéré en partie ou en totalité, c'est-à-dire que la réfrigération est assurée au moins en partie par le gaz traité.

La figure 2A schématise une variante de réalisation dans laquelle, l'échangeur de chaleur EC₁ est muni d'un circuit de réfrigération à l'aide d'un fluide caloporteur extérieur, entrant par le conduit 4 et sortant par le conduit 5 décrit à la figure 1, les conduits 4 et 5 étant situés dans sa partie supérieure et d'un circuit de réfrigération complémentaire assuré par au moins une partie du gaz traité évacué de l'échangeur par le conduit 6, entrant dans l'échangeur par un conduit 11 situé, de préférence en dessous du conduit d'évacuation 5 du fluide caloporteur, et ressortant par un conduit 6' au niveau de la partie inférieure de l'échangeur.

Le fluide caloporteur extérieur refroidit au moins en partie le gaz traité dans la partie supérieure de l'échangeur, qui sort de l'échangeur par le conduit 6 et qui est réintroduit dans l'échangeur par le conduit 11, qui prolonge le conduit 6.

Par le conduit 8, on évacue une fraction liquide qui contient en majorité les constituants les plus lourds contenus dans le gaz qui alimente l'échangeur de chaleur EC₁, et condensés lors du procédé.

Cette fraction liquide peut être stabilisée par chauffage du volume liquide recueilli au fond de l'enceinte de l'échangeur EC₁ selon le schéma représenté sur la figure 2B, qui intègre dans la partie inférieure de l'échangeur un moyen de stabilisation, tel un rebouilleur B₁. On recueille ainsi par le conduit 8 une fraction liquide déjà stabilisée et on améliore le rendement de production en C₁-C₂, le méthane et l'éthane vaporisés par chauffage se retrouvant dans le gaz traité évacué par le conduit 6'.

### Exemple 1

Un premier exemple de mise en oeuvre du procédé de base décrit en relation avec la figure 2A, permet d'obtenir à partir d'un gaz naturel renfermant des hydrocarbures supérieurs associés, un gaz déshydraté largement appauvri en constituants comportant au moins trois atomes de carbone.

L'échangeur de chaleur EC₁ est, par exemple un échangeur-colonne tubulaire, les tubes renferment un garnissage pour augmenter le transfert de matière entre le gaz, la phase aqueuse, la phase hydrocarbure et le solvant.

La composition massique du gaz naturel est par exemple la suivante :

| | |
|---|---|
| EAU | 82,30 |
| METHANOL | 0,00 |
| AZOTE | 211,97 |
| DIOXYDE DE CARBONE | 397,79 |
| METHANE | 25765,00 |
| ETHANE | 6028,62 |
| PROPANE | 4360,50 |
| ISOBUTANE | 1335,05 |
| BUTANE | 487,21 |
| ISOPENTANE | 668,81 |
| PENTANE | 528,87 |
| HEXANE | 1053,47 |
| TOTAL KG/HR | 42919,59 |

Le gaz naturel est par exemple préalablement refroidi dans l'échangeur E1 à une température supérieure ou égale à sa température de rosée voisine de 43°C, et à une pression sensiblement égale à 4,4 MPa, avant d'être injecté dans le dispositif de traitement par le conduit 2 avec un débit sensiblement égal à 42919 Kg/h. Le solvant, composé essentiellement de méthanol, est injecté par le conduit 3 à une température inférieure ou égale à la température ambiante et, par exemple, voisine de -20°C, avec un débit sensiblement égal à 13 Kg/h.

La réfrigération dans l'échangeur colonne EC₁ est assurée, par exemple dans sa partie supérieure par un fluide caloporteur qui pénètre par le conduit 4 à une température voisine de -27°C et qui est évacué par le conduit 5 à une température voisine de -23°C.

La partie inférieure de l'échangeur EC₁ est refroidie par le gaz traité évacué par le conduit 6, et réintroduit dans l'échangeur par le conduit 11 à une température sensiblement égale à - 22°C et avec une pression voisine de 4,4 MPa. Le gaz traité et recyclé abaisse la température du gaz à traiter circulant à contre-courant, par échange de chaleur avant d'être évacué par le conduit 6' à une température de 39°C.

Le gaz naturel à traiter en se refroidissant progressivement s'appauvrit d'une part, en hydrocarbures contenant plus de trois atomes de carbone qui condensent pour former une phase liquide formée d'hydrocarbures liquides, et d'autre part en eau, la phase aqueuse formée par condensation de l'eau de saturation étant évacuée par gravité au fur et à mesure de sa formation.

Au cours de l'opération de déshydratation, le gaz naturel, le méthanol et les deux phases liquides sont en contact. La présence du méthanol évite la formation de glace et d'hydrates.

En limitant la quantité de méthanol injecté en tête à la quantité nécessaire pour éviter la formation d'hydrates, on récupère en fond de l'échangeur EC₁ de l'eau de condensation du gaz traité contenant moins de 100 ppm masse de solvant. Cette eau est évacuée par le conduit 7 à une température de 43°C avec un débit voisin de 82,0 Kg/h. La phase hydrocarbure liquide enrichie en hydrocarbures C₃+ et renfermant par exemple plus de 99% d'hydrocarbures C₅+, 65% des composés C₄+ et 12% de C₃+ est évacuée par le conduit 8 après séparation de la phase aqueuse, par exemple par décantation, avec un débit d'environ 5175 Kg/h.

Le gaz traité, déshydraté et appauvri d'environ 50% en hydrocarbures C₃+ est évacué par le conduit 6, avec un débit de 37710 Kg/h. Le rendement de production des C₁ et C₂, est d'environ 98%, alors que dans un procédé selon l'art antérieur le rendement se situe aux alentours de 92%.

Selon un autre mode de réalisation, l'installation est auto-réfrigérée en utilisant comme agent de réfrigération une partie du gaz traité issu du conduit 6.

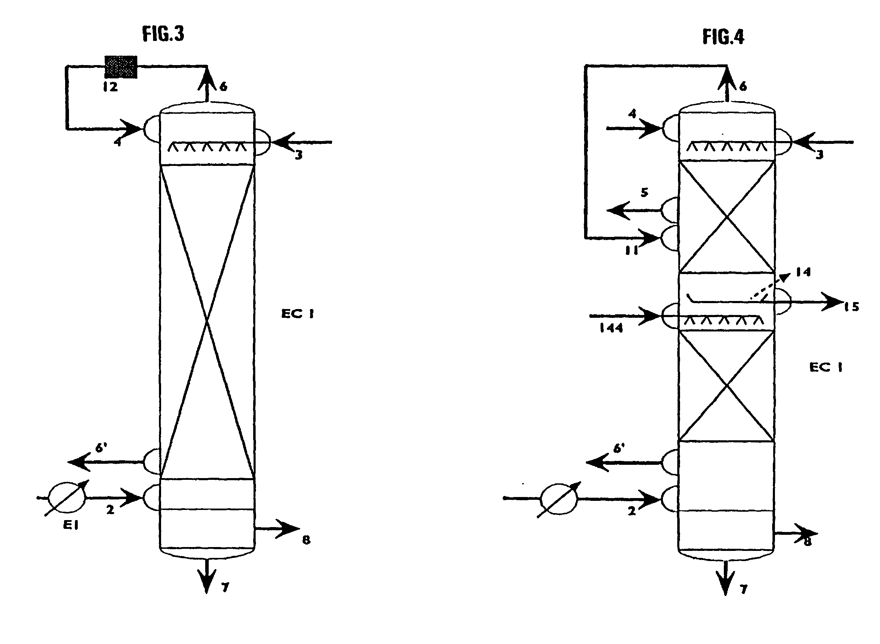

Un tel cas est illustré par l'exemple de réalisation schématisé sur la figure 3. Le gaz traité sortant en tête de l'échangeur est refroidi dans un dispositif 12 disposé sur le conduit 6, par exemple par détente à travers une vanne ou par détente à travers une turbine. Le gaz ainsi refroidi est réinjecté, par le conduit 4, dans l'échangeur EC₁, dans lequel il abaisse la température du gaz à traiter circulant dans le sens ascendant par échange thermique. Il ressort, après échange de chaleur, par le conduit 6' avant d'être envoyé vers une autre installation de traitement et/ou vers une conduite de transport.

Le gaz évacué par le conduit 6' peut éventuellement être repris par un dispositif de compression après l'échangeur (non représenté) pour assurer son transfert.

Avantageusement, l'installation permet de récupérer les coupes d'hydrocarbures plus lourds que le méthane contenues dans un gaz naturel en fonction notamment de leur composition, notamment le nombre d'atomes de carbone par molécule.

La figure 4 décrit une installation de traitement intégrant des moyens de récupération des fractions GPL d'un gaz naturel, distincts des moyens de récupération de la gazoline.

L'exemple de réalisation de la figure 4 diffère de celui qui est représenté sur la figure 2 car il comporte des moyens de récupération (14, 15) disposés au niveau de l'échangeur. Ce mode de réalisation peut aussi, sans sortir du cadre de l'invention, être combiné avec les dispositifs représentés sur les figures 1 et 3.

Le gaz naturel comporte des hydrocarbures qui condensent à des températures différentes. L'abaissement de la température selon un gradient donné dans l'échangeur, permet de condenser dans des zones différentes les différentes fractions d'hydrocarbures contenues dans le gaz naturel. Les fractions les plus lourdes sont recueillies en fond d'échangeur et les fractions les plus légères en tête d'échangeur. Il est également possible de récupérer dans une zone intermédiaire, une fraction d'hydrocarbure correspondant à un intervalle de température d'ébullition fixé.

Pour récupérer par exemple la fraction GPL, qui comprend le propane et les butanes (hydrocarbures à trois ou quatre atomes de carbone), et séparément, la gazoline représentant la fraction C₅+, l'échangeur EC₁ est équipé d'un moyen de récupération, tel qu'un plateau 14 communiquant avec le circuit principal de mise en contact du gaz traité et du solvant. Le plateau récupérateur 14 est situé dans une partie de l'échangeur, dont le niveau est fixé par exemple en fonction de la nature des coupes ou hydrocarbures à récupérer et de la température régnant à différents endroits de la colonne.

Le plateau 14 permet de séparer la phase aqueuse condensée des hydrocarbures condensés contenant principalement du propane et des butanes ainsi qu'une faible quantité de méthane et d'éthane et de les récupérer pour ensuite les évacuer au moins en partie par un conduit latéral 15.

La phase aqueuse séparée, ainsi que la phase hydrocarbure du plateau 14 non récupérée, repartent du plateau 14 vers le circuit principal de traitement dans lequel elles continuent leur circulation descendante avant d'être évacuées par les conduits 7 et 8 selon le procédé décrit, par exemple, à la figure 1.

Il est bien entendu que l'échangeur peut être équipé de plusieurs plateaux de récupération reliés à des conduits latéraux d'évacuation, distribués le long de l'échangeur en fonction de la nature des hydrocarbures à récupérer.

Dans certains cas, il s'avère avantageux de récupérer le solvant pouvant provenir d'une étape de lavage des GPL réalisée à l'extérieur de l'échangeur par extraction liquide-liquide à l'aide d'une "eau de lavage" et/ou de quantités de solvant pouvant provenir d'autres dispositifs de l'installation de traitement.

Avantageusement, le plateau 14 est équipé d'au moins un conduit 144 permettant l'injection d'une phase liquide, par exemple une phase aqueuse contenant un solvant.

La phase liquide injectée par le conduit 144 peut provenir par exemple d'une étape de lavage d'une fraction liquide prélevée, telle que, par exemple, la fraction d'hydrocarbures liquides prélevée par le conduit 15. En effet, au niveau du plateau 14 cette fraction d'hydrocarbures liquides est en équilibre avec une phase aqueuse contenant en partie du solvant et la phase gazeuse contenant également du solvant. Du fait de cet équilibre, les hydrocarbures liquides prélevés par le conduit 15 contiennent des traces de solvant .

La phase aqueuse provenant de l'étape de lavage et contenant le solvant initialement dissous dans la fraction hydrocarbure liquide, est recyclée dans l'échangeur colonne EC₁ par le conduit 144, puis elle est mise en contact à contre courant avec le gaz à traiter. Au cours de ce contact, elle cède, par transfert de matière, la quantité de solvant qui est entraînée dans la phase gazeuse.

Le conduit de réinjection de la phase liquide contenant du solvant à récupérer peut être également positionné à d'autres niveaux de l'échangeur-colonne. Il est également possible d'équiper l'échangeur-colonne de plusieurs conduits d'injection de ce type en fonction des traitements souhaités.

Cette récupération de solvant et éventuellement d'autres produits dissous permet de diminuer les coûts opératoires.

Ces modes de réalisation permettent d'améliorer la récupération des constituants d'un condensat pour différents types de gaz.

Ils s'appliquent également à des gaz autres que des gaz naturels, par exemple, à des gaz de raffinerie.

### Exemple 2

Un second exemple de mise en oeuvre de l'invention décrit en relation avec la figure 4 permet de récupérer de manière sélective les coupes d'hydrocarbures contenues dans le gaz naturel en fonction d'une composition souhaitée, par exemple les hydrocarbures associés renfermant plus de trois atomes de carbone.

Le gaz naturel est refroidi et contacté selon le procédé décrit par exemple à la figure 3. Les autres modes décrits dans les figures 1 et 2 peuvent également s'appliquer sans sortir du cadre de l'invention.

Lors du processus de déshydratation, le gaz naturel s'appauvrit en constituants lourds C₃+ en cédant par condensation au moins en partie les constituants formés de molécules à au moins trois atomes de carbone et en formant une phase hydrocarbure liquide qui s'enrichit de haut en bas en constituants de plus en plus lourds.

Pour un échangeur-colonne EC₁ dimensionné par exemple pour obtenir l'équivalent de 12 plateaux théoriques, la concentration en propane dans la phase hydrocarbures liquides obtenue au niveau du sixième plateau est, par exemple, voisine de 26% masse alors qu'elle est de 9,8% dans la phase liquide hydrocarbure évacuée en fond de l'équipement par le conduit 8. La concentration en propane évoluant tout au long de l'échangeur-colonne, il est souhaitable et avantageux de prélever les phases hydrocarbures formées selon des niveaux correspondant aux compositions recherchées.

On peut ainsi, par soutirage latéral, évacuer des phases hydrocarbures liquides de composition variable et en fonction de la demande du producteur.

Le gaz naturel est introduit par le conduit 2 avec un débit de 42837 Kg/h, avec une température voisine de 43°C, et à une pression sensiblement égale à 4,5 MPa. La quantité de méthanol injecté par le conduit 3 est, par exemple de 13,9 Kg/h pour maintenir un gradient de concentration en méthanol dans la phase aqueuse formée dans l'échangeur correspondant à une concentration variant de 99% masse en tête de l'échangeur à une température de -23°C et à une concentration de 0,01% masse en fond de l'échangeur pour une température d'environ 43°C.

Au niveau des moyens de récupération 14 et 15, (figure 4) correspondant par exemple au quatrième plateau théorique de l'échangeur, on évacue, par exemple, par le conduit 15, 70% de la phase liquide hydrocarbures contenant plus de 25% masse de propane à une température d'environ -2°C et avec un débit sensiblement égal à 3600 Kg/h.

La phase aqueuse et la phase hydrocarbure comportant la majorité des constituants ayant des atomes de carbone supérieurs à C₄+ sont évacuées après décantation par les conduits 7 et 8.

La phase hydrocarbure liquide, comportant notamment des hydrocarbures en C₅+, qui est évacuée par le conduit 8 avec un débit de 2525 Kg/h, renferme plus de 75 % des hydrocarbures en C₅+ contenus dans le gaz à traiter.

Le gaz naturel traité et refroidi par détente dans le dispositif 12, assure par échange thermique, la réfrigération du gaz naturel à traiter circulant à contre-courant, avant d'être évacuée, après échange, par le conduit 6' avec un débit de 36715 Kg/h. Il est déshydraté et appauvri de plus de 55% des hydrocarbures en C₃+.

Une comparaison entre les deux exemples de mise en oeuvre décrits respectivement en relation aux figures 2 et 4 montre l'avantage de récupérer les hydrocarbures selon des zones choisies.

On récupère au niveau du plateau 14, une phase hydrocarbure enrichie de 65% en composés C₃ et C₄, alors que la phase hydrocarbure évacuée par le conduit 8 n'est enrichie que d'environ 20 % en C₃ et C₄.

D'autre part, en procédant à une récupération latérale des coupes en fonction de leur composition et de leur zone de condensation, on obtient des phases hydrocarbures liquides différents en composition, l'une riche en constituants C₃ et C₄ soutirée latéralement, l'autre riche en C₅ et C₆ évacuée en fond de l'équipement.

De cette façon, le rendement de production en constituants C₁ et C₂ dans le gaz traité est également augmenté.

Avantageusement, l'installation permet de réaliser la stabilisation des fractions d'hydrocarbures récupérées selon l'un des procédés décrits en relation aux figures 1 à 4.

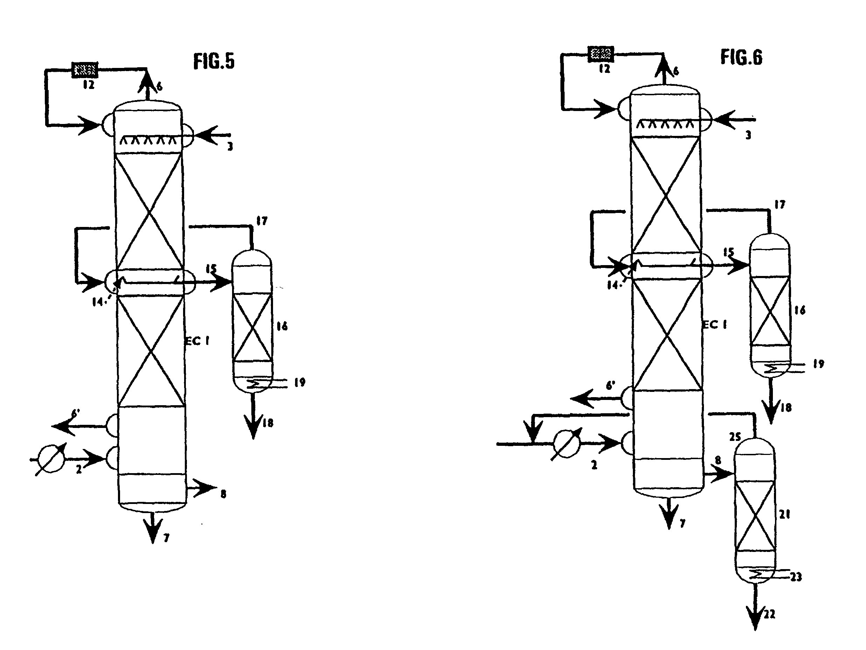

Les figures 5 et 6 décrivent respectivement des installations comportant un dispositif de déshydratation muni de moyens de stabilisation des hydrocarbures condensés (GPL et gazoline).

Sur la figure 5, le conduit d'évacuation 15 communiquant avec le plateau de récupération 14 des GPL condensés de la figure 4 est relié à un dispositif 16 permettant leur stabilisation. Le dispositif utilisé est, par exemple, un dispositif de stabilisation connu de l'homme de l'art qui ne sera donc pas décrit.

Selon un autre mode de réalisation, le dispositif utilisé pour la stabilisation comporte par exemple un échangeur tel que décrit précédemment permettant d'effectuer simultanément un échange thermique et un échange de matière, qui sera décrit plus loin aux figures 8 et 9.

Le procédé de stabilisation complémentaire à la récupération des fractions d'hydrocarbures, consiste à envoyer dans le dispositif de stabilisation 16 la fraction de condensat récupérée au niveau du plateau 14 et comportant du méthane et de l'éthane en faible quantité et une majorité de GPL condensé.

La fraction riche en méthane et en éthane est évacuée du dispositif de stabilisation 16 par un conduit 17 et recyclée vers l'échangeur EC₁ au niveau du plateau 14 pour être récupérée et mélangée avec le gaz à traiter.

La fraction GPL stabilisée ressort dans la partie inférieure du dispositif de stabilisation au niveau du rebouilleur 19 par un conduit 18.

Une telle manière de procéder permet avantageusement de stabiliser les GPL avant leur récupération par le producteur et d'autre part d'augmenter le rendement en méthane et en éthane du procédé.

Sur la figure 6, l'installation décrite à la figure 5 comporte un deuxième dispositif de stabilisation 21 permettant de stabiliser la gazoline évacuée par le conduit 8.

Le schéma de fonctionnement est identique à celui décrit en relation avec la figure 5, le condensat évacué par le conduit 8 comportant en majorité de la gazoline et en faible quantité des hydrocarbures en C₁ à C₄ est envoyé dans le dispositif de stabilisation 21.

La partie de gazoline stabilisée est évacuée par le conduit 22 au niveau du rebouilleur 23.

La fraction gazeuse composée essentiellement de méthane, éthane et propane, est évacuée du dispositif par le conduit 25 pour être recyclée et remélangée avec le gaz à traiter arrivant par le conduit 2.

Ces deux modes de réalisation permettent d'optimiser la récupération des fractions hydrocarbures.

Il est possible d'améliorer la stabilisation des fractions de GPL et de la gazoline produits.

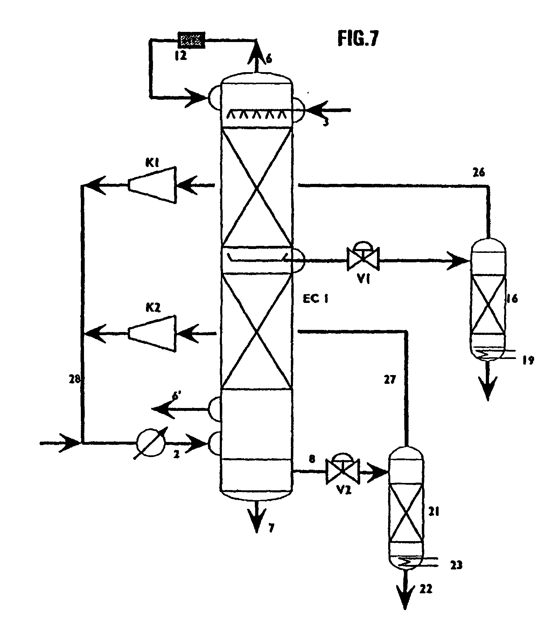

Pour cela, l'installation décrite à la figure 7 diffère de celle de la figure 6 par l'adjonction de deux vannes de détente V₁ et V₂ situées respectivement sur les conduits d'évacuation 14 et 8.

Les fractions gazeuses issues des dispositifs de stabilisation 16 et 21, sont recomprimées au travers des moyens tels des compresseurs K₁ et K₂ avant d'être renvoyés par un conduit 28 vers le gaz à traiter au niveau de la conduite 2.

Différentes technologies, connues de l'homme de métier, peuvent être employées pour réaliser l'échangeur, et les moyens ou dispositifs associés, parmi lesquelles certaines sont décrites ci-après à titre d'exemples non limitatifs.

Les figures 8 et 9 décrivent des variantes de réalisation du dispositif selon l'invention où la stabilisation d'une fraction liquide est effectuée dans une zone de contact et d'échange thermique, telle que celle décrite précédemment.

Pour cela on fait passer l'une au moins des fractions liquides recueillies dans une zone de contact et d'échange de chaleur dans laquelle elle est simultanément :
- mise en contact à contre-courant avec une phase vapeur ascendante,
- chauffée par échange de chaleur indirect dans ladite zone de contact et d'échange.

Par exemple, dans le cas de deux zones de contact et d'échange de chaleur Z₁, Z₂, la fraction liquide issue de la zone Z₁ peut être stabilisée dans une zone de contact et d'échange Z₃ comme le montre la figure 8.

Dans cet exemple, le gaz à traiter arrive par le conduit 50 dans la zone de contact et d'échange Z₁. On recueille en tête de cette zone de contact et d'échange thermique Z₁ une phase gazeuse enrichie en solvant, qui est envoyée vers la zone de contact et d'échange Z₂ et qui ressort par le conduit 52 en tête de cette zone de contact Z₂. On recueille une fraction liquide relativement légère, qui est évacuée par le conduit 53.

En tête de la zone Z₁, on envoie un solvant par le conduit 100, par exemple pour éviter la formation d'hydrates, ce solvant étant principalement évacué dans le gaz sortant par le conduit 52.

En fond de la zone de contact et d'échange Z₁, on recueille une fraction liquide relativement lourde, qui est évacuée par le conduit 54.

Cette fraction liquide est ensuite envoyée dans la zone de contact et d'échange thermique Z₃ dans laquelle elle est simultanément :
- mise en contact avec la phase vapeur ascendante.
- chauffée par échange de chaleur indirect. Cet échange de chaleur indirect peut être effectué, d'une part avec un fluide de chauffage externe qui arrive par le conduit 51 et repart par le conduit 55, d'autre part avec la fraction liquide, qui sortant de la zone Z₃ par le conduit 56 est reprise par la pompe P1 et envoyée dans la.zone Z₃ d'où elle ressort refroidie, par le conduit 57. Le fluide de chauffage externe peut être, par exemple, le gaz à traiter lorsqu'il est suffisamment chaud, par exemple à l'issue d'une étape de compression, ou tout autre fluide disponible à la température adéquate.
- la fraction liquide après passage dans la zone de contact et de traitement ressort sous forme stabilisée, c'est-à-dire substantiellement débarrassée des hydrocarbures les plus légers qu'elle contient, au niveau de la partie inférieure de la zone d'échange et de matière Z₃.

Il est également possible de stabiliser une fraction liquide issue d'une zone de contact et d'échange en la faisant circuler en écoulement descendant dans une zone de contact et d'échange thermique située en-dessous de la zone de contact et d'échange d'où est issue ladite fraction liquide, à contre-courant de la phase vapeur générée par chauffage dans la zone de contact et d'échange dans laquelle s'effectue la stabilisation.

Par exemple, dans le cas de deux zones de contact et d'échange Z₁, Z₂, la fraction liquide issue de la zone Z₁ peut être stabilisée dans la zone Z₂ comme le montre le schéma de la figure 9.

Dans cet exemple, la fraction liquide issue de la zone Z₂ est envoyée dans la zone Z₁ dans laquelle elle circule à contre-courant avec la phase vapeur générée par chauffage dans cette zone Z₁. Cet échange thermique contribue par ailleurs au refroidissement du gaz arrivant par le conduit 50. La fraction liquide stabilisée est évacuée par le conduit 60. La fraction vapeur issue de cette étape de stabilisation est évacuée en tête de la zone Z1 et envoyée en 61 dans la zone Z₂.

Les fractions liquides issues d'une des zones de contact et d'échange thermique peuvent être également stabilisées dans une zone de contact et d'échange thermique opérant à une température plus élevée, après détente pour faciliter l'opération de stabilisation.

Les fractions vapeurs issues d'une telle étape de stabilisation doivent être dans ce cas recomprimées avant d'être envoyées dans une zone de contact et d'échange supérieure.

Le procédé selon l'invention permet ainsi de séparer, de fractionner et de stabiliser les fractions condensables contenues dans un gaz à traiter.

Par exemple, dans le cas d'un gaz naturel, et utilisant trois zones de contact et d'échange thermique Z₁, Z₂ et Z₃ opérant selon le schéma représenté sur la figure 8, il est possible d'avoir une fraction gazoline stabilisée en C₅₊ à la base de la zone Z₃ et une fraction GPL à la base de la zone Z₂ qui peut être stabilisée dans la zone Z₁ en opérant selon le schéma représenté sur la figure 7.

En disposant d'une quatrième zone de contact et d'échange Z₁, Z₂ située au-dessus de la zone Z₁, Z₂ et opérant à une température plus basse, il est possible de séparer également une fraction C₂ qui peut être stabilisée par échange thermique, en circulant par exemple dans les zones Z₁ et/ou Z₂.

L'échangeur EC₁ est par exemple un échangeur de type tubes et calandre tel que celui qui est schématisé sur la figure 10.

Le gaz à traiter arrivant par le conduit 2, circule dans un sens ascendant à l'intérieur de tubes verticaux 30. Ces tubes sont de préférence pourvus d'un garnissage, par exemple un garnissage structuré permettant d'améliorer le contact entre le gaz qui monte et les fractions liquides qui descendent. Le gaz traité est évacué en tête par le conduit 6. Le solvant est introduit par le conduit 3 et envoyé dans les différents tubes 30 par une rampe d'alimentation 31 vers un plateau de distribution 32.

La phase hydrocarbure liquide, stabilisée par chauffage à l'aide d'un rebouilleur B₂ situé dans la partie inférieure de l'échangeur EC₁, par exemple, est évacuée sous contrôle de niveau, par le conduit 8, et la phase aqueuse est évacuée sous contrôle de niveau par le conduit 7.

La réfrigération est assurée par un fluide caloporteur introduit dans l'échangeur par le conduit 33 et évacué après échange thermique par le conduit 34.

Selon une autre technologie, l'échangeur EC₁ est un échangeur à plaques, par exemple en aluminium brasé, tel que celui qui est schématisé sur la figure 11.

Un tel échangeur est constitué par un assemblage de plaques planes 35 entre lesquelles se trouvent des plaques intercalaires ondulées 36 qui permettent de maintenir mécaniquement l'assemblage et d'améliorer le transfert thermique.

Ces plaques délimitent des canaux 37 dans lesquels circulent les fluides participant au cours du procédé à l'échange thermique.

Le gaz à traiter introduit dans l'échangeur par le conduit 2 circule dans les canaux 37 dans une direction ascendante en étant refroidi au fur et à mesure par le fluide caloporteur. Les plaques intercalaires ondulées 36, jouant le rôle d'un garnissage structuré, favorisent le contact entre le gaz qui monte et les fractions liquides qui descendent. Le solvant envoyé par le conduit 3 est distribué uniformément au dessus des canaux 37 dans lesquels circule le gaz à traiter.

Dans le cas d'un procédé auto-réfrigéré, le gaz déshydraté est évacué en tête d'échangeur par le conduit 6, refroidi par détente, selon un procédé par exemple décrit à la figure 3 et réintroduit au niveau de la partie supérieure de l'échangeur par le conduit 38 qui arrive sensiblement perpendiculairement au plan de la coupe représentée sur la figure 11 dans une enceinte d'alimentation des canaux non représentée sur la figure. Il est évacué après échange thermique par le conduit 39 qui ressort perpendiculairement au plan de la coupe représentée sur la figure 11, le conduit étant relié à une enceinte d'évacuation des canaux non représentée sur la figure. Les enceintes d'alimentation et d'évacuation sont des dispositifs connus de l'homme de métier permettant le passage des fluides circulant dans chacun des canaux dans le conduit d'évacuation et inversement de distribuer le fluide provenant d'un conduit dans les différents canaux.

La phase hydrocarbure liquide, éventuellement stabilisée par le rebouilleur B₃, est évacuée sous contrôle de niveau (LC, V) par le conduit 8 et la phase aqueuse est évacuée sous contrôle de niveau par le conduit 7.

D'autres types d'échangeurs à plaques peuvent être également utilisés, par exemple des échangeurs à plaques en acier inoxydables soudées entre elles, soit bord à bord, soit sur toute leur surface par exemple par une technique de soudage par diffusion.

Les plaques sont, par exemple, formées par explosion ou gravées chimiquement.

Il est bien entendu que sans sortir du cadre de l'invention, l'homme de métier fera appel à toutes les techniques connues et disponibles pour améliorer le contact entre les phases et/ou la distribution des fluides.

La figure 12 schématise un exemple de réalisation d'un plateau permettant de prélever des phases en fonction de leur nature selon un procédé décrit à la figure 4, par exemple.

Le plateau comporte des cheminées 40 permettant au gaz de remonter vers la partie supérieure de l'échangeur. La phase liquide qui est recueillie sur ce plateau peut être évacuée par le conduit 15 avec un débit contrôlé, mais peut également s'écouler par débordement vers la partie inférieure de l'échangeur. Il est ainsi possible de ne recueillir qu'une fraction de la phase liquide arrivant de la partie supérieure de l'échangeur.

Si deux phases liquides sont prélevées sur le plateau, par exemple une phase hydrocarbure liquide et une phase aqueuse, il est possible de les évacuer au moins en partie séparément. La phase aqueuse qui est plus lourde tend à s'accumuler au fond du plateau et il est possible de l'évacuer par exemple à travers des perforations 41 aménagées dans le plateau.

Tout autre mode d'évacuation de l'une ou l'autre des phases connu de l'homme de l'art pourra être utilisé pour sans sortir du cadre de l'invention.

De manière générale, toute technologie d'échange thermique peut être utilisée à condition de permettre :
- des échanges thermiques à contre-courant,
- la circulation indépendante de plusieurs fluides pouvant être amenés et évacués indépendamment,
Une zone d'échange et de contact Zi doit pouvoir ainsi être opérée selon le schéma de la figure 13 en assurant simultanément le passage :
- d'une ou plusieurs fractions gazeuses arrivant par le conduit 70, circulant à contre-courant d'une phase liquide générée par refroidissement dans la zone Zi, en produisant une fraction gazeuse évacuée en tête de la zone Zi, par le conduit 71 et une fraction liquide évacuée en fond de la zone Zi par le conduit 72,
- d'une ou plusieurs fractions liquides arrivnat par le conduit 80 pouvant comprendre un solvant, circulant à contre-courant d'une phase vapeur générée par chauffage dans la zone Zi, en produisant une fraction gazeuse évacuée en tête de la zone Zi par le conduit 81 et une fraction liquide évacuée en fond de la zone Zi par le conduit 82,
- d'un ou plusieurs fluides contribuant au refroidissement ou au chauffage de la zone Zi par un exemple de refroidissement peut arriver par le conduit 91 en tête de la zone Zi et être évacuée par le conduit 92 en fond de la zone Zi.

## Revendications

1. Procédé de traitement d'un gaz naturel contenant au moins de l'eau dans le but de débarasser au moins en partie ledit gaz de l'eau comprenant au moins les étapes suivantes
a) on introduit dans une zone de contact ledit gaz par un premier conduit et un liquide comprenant une phase aqueuse en présence d'un solvant, par un deuxième conduit, ledit solvant étant un composé non hydrocarbure autre que de l'eau,
b) on met en contact direct ledit gaz avec ledit liquide sur au moins une partie de la zone de contact, et on refroidit dans ladite zone de contact ledit gaz en contact avec ledit liquide au moyen d'un circuit de réfrigération pour provoquer la condensation d'une phase liquide qui contient de l'eau et qui est substantiellement débarrassée de solvant,
c) on évacue en fond de la zone de contact ladite phase liquide par un troisième conduit,
d) on évacue en tête de la zone de contact une phase gazeuse non condensée par un quatrième conduit,
e) on récupère une première phase hydrocarbure à un niveau intermédiaire entre la tête et le fond de la zone de contact et on évacue ladite première phase hydrocarbure par un cinquième conduit.

2. Procédé selon la revendication 1 **caractérisé en ce qu'**on introduit ledit liquide dans la partie supérieure de la zone de contact.

3. Procédé selon l'une des revendications précédentes **caractérisé en ce que** dans la zone de mise en contact, ledit gaz naturel circule à contre courant dudit liquide.

4. Procédé selon l'une des revendications 1 à 3 **caractérisé en ce que** à l'étape b), on refroidit en produisant un gradient de température variant en fonction de la nature dudit gaz et/ou de la nature dudit solvant.

5. Procédé selon l'une des revendications de 1 à 4 **caractérisé en ce que** à l'étape b), on utilise ladite phase gazeuse pour refroidir ledit gaz en contact avec ledit liquide.

6. Procédé selon l'une des revendications précédentes **caractérisé en ce que** le solvant est choisi dans le groupe comprenant: méthylpropyléther, éthylpropyléther, dipropyléther, méthyltertiobutyléther, dimethoxyméthane, diméthoxyéthane, méthanol, éthanol, méthoxyéthanol, propanol, les amines et les cétones.

7. Procédé selon l'une des revendications précédentes **caractérisé en ce que** :
f) en fond de la zone de contact, on sépare par décantation ladite phase liquide en une deuxième phase aqueuse et une deuxième phase hydrocarbure, et
g) on évacue ladite deuxième phase hydrocarbure par un sixième conduit.

8. Procédé selon l'une des revendications précédentes **caractérisé en ce que** ladite zone de contact comporte un rebouilleur.

9. Procédé selon l'une des revendications 7 et 8 **caractérisé en ce que** chacune desdites première et deuxième phase hydrocarbure est introduite dans un moyen de stabilisation.

10. Application du procédé selon l'une des revendications 1 à 9 à la déshydratation d'un gaz naturel comportant de l'eau et au moins un hydrocarbure autre que le méthane et à la séparation au moins partielle des hydrocarbures autres que le méthane.

## Patentansprüche

1. Verfahren zur Behandlung eines Naturgases, welches wenigstens Wasser enthält, um wenigstens ein Teil des Wassers aus dem besagten Gas zu entziehen, in welchem zumindest die folgenden Stufen durchgeführt werden :
a) das besagte Gas wird durch eine erste Leitung in eine Berührungszone geführt und eine eine wässerige Phase enthältende Flüssigkeit wird in Anwesenheit eines Lösungsmittels durch eine zweite Leitung eingeführt, wobei das besagte Lösungsmittel eine Nichtkohlenwasserstoff-Verbindung anders als Wasser ist,
b) das besagte Gas wird mit der besagten Flüssigkeit direkt in Berührung gebracht in wenigstens einem Teil der Berührungszone, und das besagte Gas in Berührung mit der besagten Flüssigkeit wird in der besagten Berührungszone mittels eines Kühlkreises gekühlt um die Kondensierung einer wasserenthaltenden und im wesentlichen Lösungsmittelfreien flüssiger Phase hervorzurufen,
c) die besagte flüssige Phase wird mittels einer dritten Leitung im unteren Teil der Berührungszone ausgelassen,
d) eine nichtkondensierte Gasphase wird mittels einer vierten Leitung im oberen Teil der Berührungszone ausgelassen,
e) eine erste Kohlenwasserstoffphase wird an einem Zwischen-Niveau zwischen dem Kopf und dem Boden der Berührungszone aufgefangen und die besagte erste Kohlenwasserstoffphase wird mittels einer fünften Leitung ausgelassen.

2. Verfahren gemäß Anspruch 1, **dadurch gekennzeichnet, daß** die besagte Flüssigkeit in den oberen Teil der Berührungszone eingeführt wird.

3. Verfahren gemäß irgendeinem der vorstehenden Ansprüche, **dadurch gekennzeichnet, daß** das besagte Naturgas gegenströmig zu der besagten Flüssigkeit in der Berührungszone zirkuliert.

4. Verfahren gemäß einem der Ansprüche 1 bis 3, **dadurch gekennzeichnet, daß** in Stufe b) gekühlt wird, indem ein Temperaturgradient erzeugt wird, welcher in Abhängigkeit von der Natur des besagten Gases und/oder der Natur des besagten Lösungsmittels variiert.

5. Verfahren gemäß einem der Ansprüche 1 bis 4, **dadurch gekennzeichnet, daß** in Stufe b) die besagte Gasphase benutzt wird, um das besagte Gas in Berührung mit der besagten Flüssigkeit zu kühlen.

6. Verfahren gemäß irgendeinem der vorstehenden Ansprüche, **dadurch gekennzeichnet, daß** das Lösungsmittel aus der folgenden Gruppe gewählt wird: Methylpropylether, Äthylpropylether, Dipropylether, Methyltertiobutylether, Dimethoxymethan, Dimethoxyäthan, Methanol, Ethanol, Methoxyethanol, Propanol, die Aminen und die Ketonen.

7. Verfahren gemäß irgendeinem der vorstehenden Ansprüche, **dadurch gekennzeichnet, daß** :
f) die besagte flüssige Phase durch Dekantieren in eine zweite wässerige Phase und eine zweite Kohlenwasserstoffphase am Boden der Berührungszone getrennt wird, und daß
g) die besagte zweite Kohlenwasserstoffphase mittels einer sechsten Leitung ausgelassen wird.

8. Verfahren gemäß irgendeinem der vorstehenden Ansprüche, **dadurch gekennzeichnet, daß** die besagte Berührungszone einen Reboiler enthält.

9. Verfahren gemäß einem der Ansprüche 7 und 8, **dadurch gekennzeichnet, daß** jede der besagten erste und zweite Kohlenwasserstoffphase in ein Stabilisierungsmittel eingeführt wird.

10. Anwendung des Verfahrens gemäß irgendeinem der Ansprüche 1 bis 9 zur Entwässerung eines Naturgases welches Wasser und wenigstens ein Kohlenwasserstoff anders als Methan enthält, und zur wenigstens partiellen Trennung der Kohlenwasserstoffe anders als Methan.

## Claims

1. A method of treating a natural gas containing at least water in order to remove at least part of the water from the said gas, **characterised in that** it comprises at least the following stages :
a) the said gas is fed into a contact zone through a first line and a liquid containing at least an aqueous phase in the presence of a solvent through a second line, the said solvent being a non-hydrocarbon compound other than water,
b) the said gas is directly contacted with the said liquid over at least part of the contact zone, and the said gas in contact with the said liquid is cooled in the said contact zone by means of a cooling circuit so as to cause condensation of a liquid phase containing water and from which the solvent has been substantially removed,
c) the said liquid phase is discharged at the bottom of the contact zone through a third line,
d) a non-condensed gas phase is discharged at the top of the contact zone through a fourth line,
e) a first hydrocarbon phase is collected at an intermediate level between the top and the bottom of the contact zone and the said first hydrocarbon phase is discharged through a fifth line.

2. A method as claimed in claim 1, **characterised in that** the said liquid is fed into the upper part of the contact zone.

3. A method as claimed in any one of the previous claims, **characterised in that** the said natural gas circulates countercurrent to the said liquid in the contact zone.

4. A method as claimed in any one of claims 1 to 3, **characterised in that**, in stage b), cooling is performed by producing a temperature gradient which varies as a function of the nature of the said gas and/or of the nature of the said solvent.

5. A method as claimed in any one of claims 1 to 4, **characterised in that**, in stage b), the said gas phase is used to cool the said gas in contact with the said liquid.

6. A method as claimed in any one of the previous claims, **characterised in that** the solvent is selected from the group comprising : methylpropylether, ethylpropylether, dipropylether, methyltertiobutylether, dimethoxymethane, dimethoxyethane, methanol, ethanol, methoxyethanol, propanol, amines and ketones.

7. A method as claimed in any one of the previous claims, **characterised in that**:
f) at the bottom of the contact zone, the said liquid phase is separated by decantation into a second aqueous phase and a second hydrocarbon phase, and
g) the said second hydrocarbon phase is discharged through a sixth line.

8. A method as claimed in any one of the previous claims, **characterised in that** the said contact zone comprises a reboiler.

9. A method as claimed in any one of claims 7 and 8, **characterised in that** each one of the said first and second hydrocarbon phase is fed into a stabilization means.

10. Application of the method as claimed in any one of claims 1 to 9 to dehydration of a natural gas containing water and at least one hydrocarbon other than methane, and to at least partial separation of the hydrocarbons other than methane.
